(19) Europäisches Patentamt
European Patent Office
Office européen des brevets

(11) Publication number: 0 383 275 B1

(12) # EUROPEAN PATENT SPECIFICATION

(45) Date of publication of patent specification: **05.01.94**

(51) Int. Cl.$^5$: **C08F 4/68**, C08F 10/02

(21) Application number: **90102822.5**

(22) Date of filing: **13.02.90**

(54) **Ethylene polymerization catalyst.**

(30) Priority: **14.02.89 US 310282**

(43) Date of publication of application: **22.08.90 Bulletin 90/34**

(45) Publication of the grant of the patent: **05.01.94 Bulletin 94/01**

(84) Designated Contracting States: **AT BE CH DE DK ES FR GB GR IT LI LU NL SE**

(56) References cited:
**EP-A- 0 120 501**
**EP-A- 0 187 495**
**GB-A- 2 051 833**

(73) Proprietor: **UNION CARBIDE CHEMICALS AND PLASTICS COMPANY, INC.**
**39 Old Ridgebury Road**
**Danbury Connecticut 06817-0001(US)**

(72) Inventor: **Samuels, Sari Beth**
**P.O. Box 758**
**Ramsey, New Jersey 07446(US)**
Inventor: **Karol, Frederick John**
**18 Hiland Drive**
**Belle Mead N.J. 08502(US)**

(74) Representative: **Weinhold, Peter, Dr. et al**
**Patentanwälte Dr. V. Schmied-Kowarzik**
**Dipl.-Ing. G. Dannenberg**
**Dr. P. Weinhold**
**Dr. D. Gudel**
**Dipl.-Ing. S. Schubert**
**Dr. P.**
**Barz**
**Siegfriedstrasse 8**
**D-80803 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 383 275 B1

## Description

### Technical Field

This invention relates to a vanadium catalyst useful in ethylene polymerization.

### Background Art

A number of vanadium catalysts have been described in the literature based on species such as $VCl_4$, $VCl_3$, $VOCl_3$, and vanadyl tris-acetylacetonate. Impregnated into or chemically anchored to supports such as silica, these catalysts provide polyethylene with a broad molecular weight distribution and certain desirable properties. However, these catalyst systems are plagued by several problems, among them, low activity. Particularly in a gas phase process, high activity and hence low catalyst residues, obviating the need for removal, are desired.

Recently vanadium catalysts have come to the fore in polyethylene production because of the discovery of a particular catalyst composition, which is singularly effective in gas phase processes. The advantages of this catalyst composition are superior hydrogen response thus achieving very low levels of unsaturation in the polymer; a high degree of productivity resulting in very low catalyst residues; and the production of polyethylenes having a relatively broad molecular weight distribution and a wide melt index range. Further, they permit the utilization of a broad range of alpha-olefin comonomers, which enables the production of a wide range of densities; and they provide polymers having high bulk densities and readily fluidizable particle sizes low in fines, substantially free of agglomeration.

The particular catalyst system referred to comprises (i) the reaction product of a vanadium trihalide and an electron donor and a modifier impregnated into a silica support; (ii) a halocarbon promoter; and (iii) a hydrocarbyl aluminum cocatalyst.

Reaction by-products of the halocarbon promoters, however, cause process equipment corrosion and contribute to resin color development and instability. Thus, it would be desirable to have a vanadium based catalyst and system of comparable activity without the use of the halocarbon promoter.

### Disclosure of the Invention

An object of the invention, therefore, is to provide a vanadium based catalyst system, which does not require a promoter to attain an activity level equivalent to the promoted systems.

According to the present invention, a vanadium catalyst system which meets the above objective has been discovered. The catalyst system comprises:

(i) the reaction product of a vanadium compound and an electron donor, which is a liquid, organic Lewis base in which the vanadium compound is soluble;

(ii) an alkylhalosilane having the following formula:

$$R_a\text{—}Si\text{—}X_b$$

wherein

R is an alkyl having 1 to 10 carbon atoms;

X is chlorine, bromine, or iodine, and each X is alike or different;

a is 1 or 2;

b is 2 or 3; and

a + b = 4.

(iii) a silica support into which components (i) and (ii) are impregnated; and

(iv) a hydrocarbyl aluminum cocatalyst.

### Detailed Description

The vanadium compound can be any one of the well known group of vanadium compounds used to form those complexes, which find use as catalyst precursors in polymerization processes. Examples are vanadium trihalides, vanadium tetrahalides, and vanadium oxyhalides. The halides are generally chlorides, bromides, or iodides, or combinations thereof. Of these compounds $VCl_3$, $VCl_4$, and $VOCl_3$ can be

mentioned as being preferred and particularly useful. The vanadium acetylacetonates such as vanadyl triacetylacetonate are also useful.

The electron donor is a liquid, organic Lewis base in which the vanadium compound is soluble. Examples of suitable electron donor compounds are alkyl esters of aliphatic and aromatic carboxylic acids, aliphatic ketones, aliphatic amines, aliphatic alcohols, alkyl and cycloalkyl ethers, and mixtures thereof, each electron donor having 2 to 20 carbon atoms. Among these electron donors, the preferred are alkyl and cycloalkyl ethers having 2 to 20 carbon atoms; dialkyl, diaryl, and alkylaryl ketones having 3 to 20 carbon atoms; and alkyl, alkoxy, and alkylalkoxy esters of alkyl and aryl carboxylic acids having 2 to 20 carbon atoms. The most preferred electron donor is tetrahydrofuran. Other examples of suitable electron donors are methyl formate, ethyl acetate, butyl acetate, ethyl ether, dioxane, di-n-propyl ether, dibutyl ether, ethyl formate, methyl acetate, ethyl anisate, ethylene carbonate, tetrahydropyran, ethyl propionate, tetrahydrofuran, acetone, n-butylamine, ethanol, and isopropyl alcohol.

When an excess of electron donor is used initially to provide the reaction product of vanadium compound and electron donor, the reaction product finally contains 1 to 20 moles of electron donor per mole of vanadium compound and preferably 1 to 10 moles of electron donor per mole of vanadium compound. About 3 moles of electron donor per mole of vanadium compound has been found to be most preferable.

The alkylhalosilane has the following formula:

$$R_a—Si—X_b$$

wherein

R is an alkyl having 1 to 10 carbon atoms; X is a chlorine, bromine, or iodine, and each X is alike or different;

a is 1 or 2;

b is 2 or 3; and

a + b = 4.

The alkyl substituents can be branched or straight chain and preferably have 1 to 5 carbon atoms. Examples of suitable alkyl radicals are methyl, ethyl, propyl, isopropyl, n-butyl, tert-butyl, n-pentyl, and n-hexyl. Alkylhalosilanes which can be used in the catalyst system are methyltrichlorosilane, dimethyldichlorosilane, ethyltrichlorosilane, tert-butyltrichlorosilane, dimethyldibromosilane, and n-hexyltrichlorosilane. The mole ratio of alkylhalosilane to vanadium is usually in the range of 150:1 to 500:1 and is preferably in the range of 200:1 to 300:1.

The silica support is usually a solid, particulate porous material essentially inert to the polymerization. It is usually used as a dry powder having an average particle size of 10 to 250 μm (microns) and preferably 30 to 100 μm (microns); a surface area of at least 3 square meters per gram and preferably about 50 square meters per gram; and a pore size of at least 8 nm (80 Angstroms) and preferably at least 10 nm (100 Angstroms). Generally, the amount of support used is that which will provide 0.05 to 0.5 millimole of vanadium compound per gram of support and preferably 0.2 to 0.3 millimole of vanadium compound per gram of support.

The hydrocarbyl aluminum cocatalyst can be represented by the formula $R_3Al$ wherein each R is independently alkyl or aryl having from 1 to 14 carbon atoms, and preferably 2 to 8 carbon atoms. Each alkyl substituent can be straight or branched chain.

Examples of suitable hydrocarbyl aluminum compounds are triisobutylaluminum, trihexylaluminum, di-isobutylhexylaluminum, isobutyl dihexylaluminum, trimethylaluminum, triethylaluminum, tripropylaluminum, triisopropylaluminum, tri-n-butylaluminum, trioctyaluminum, tridecylaluminum, tridodecylaluminum, tribenzylaluminum, triphenylaluminum, trinaphthylaluminum, and tritolylaluminum. The preferred hydrocarbyl aluminums are triethylaluminum, triisobutylaluminum, and trihexylaluminum.

The cocatalyst can be added to the supported vanadium complex/alkylhalosilane either before or during the polymerization reaction. It can be added together or separately, simultaneously or sequentially. The cocatalyst is preferably added separately as a solution in an inert solvent, such as isopentane, to the polymerization reactor at the same time as the flow of ethylene is initiated. The cocatalyst is necessary to obtain any significant polymerization. 5 to 500 moles, and preferably 10 to 40 moles, of cocatalyst can be used per mole of vanadium catalyst, i.e., the reaction product of the vanadium compound and the electron donor.

To improve the activity of the catalyst system to an even greater extent, a halocarbon promoter (with its attendant deficiencies) and/or a modifier can be added to the system.

Useful halocarbon promoters have the following formula:

$R_cCX_{(4-c)}$

wherein

R is hydrogen or an unsubstituted or halogen substituted alkyl having from 1 to 6 carbon atoms;

X is a halogen, and each X is alike or different; and

c is 0, 1, or 2.

Preferred promoters include fluoro-, chloro-, and bromo-substituted methane or ethane having at least 2 halogen atoms attached to a carbon atom, e.g., methylene dichloride, 1,1,1-trichloroethane, chloroform, $CBr_4$, $CFCl_3$, hexachloroethane, $CH_3CCl_3$, and $CF_2ClCCl_3$. The first three mentioned promoters are especially preferred. 0.1 to 10 moles, and preferably 0.2 to 2 moles, of promoter can be used per mole of cocatalyst.

Modifiers useful in accordance with the invention have the formula $BX_3$ or $AlR_{(3-a)}X_a$ wherein each R is independently alkyl having 1 to 14 carbon atoms; X is independently chlorine, bromine, or iodine; and a is 0, 1, or 2. Preferred modifiers include alkylaluminum mono- and di-chlorides wherein each alkyl has from 1 to 6 carbon atoms, and boron halide compounds such as boron trichloride. A particularly preferred modifier is diethyl aluminum chloride. Examples of other useful modifiers include the trialkylaluminum compounds mentioned above. 0.1 to 10 moles, and preferably 0.2 to 2.5 moles, of modifier are used per mole of electron donor. When the modifier is used it is believed to become a part of the vanadium compound/electron donor complex.

The supported catalyst is typically prepared as follows: silica gel is activated at a temperature in the range of 250°C to 800 °C under a dry, inert gas such as nitrogen for 8 to 16 hours to give a support essentially free of adsorbed water and containing less than 0.7 millimole per gram of silica of surface hydroxy groups. Vanadium trichloride is then dissolved in excess freshly distilled tetrahydrofuran (THF) and the resulting solution is impregnated into the pores of the silica, all under nitrogen. After the residual THF is removed, the free flowing promoter, which remains, is treated with an alkylhalosilane at reflux temperature. The excess silane is decanted and the solid catalyst is washed with hydrocarbon solvent. After drying, the catalyst is used, as is, without further modification.

In the event that a promoter is to be used, the silica and promoter are usually first slurried in THF and the vanadium trichloride is added. If a modifier is to be used, the final dried catalyst, i.e., after the alkylhalosilane treatment, is slurried in dry, deoxygenated hexane. The modifier is added to the hexane slurry and, after stirring for 20 to 30 minutes, the hexane is removed to give a free flowing powder.

The ethylene polymerization can be conducted in the gas phase or liquid phase using conventional techniques such as fluidized bed, slurry, or solution processes. A fluidized bed process as well as vanadium based catalysis is described in U.S. patent 4,508,842. Solution and slurry polymerization of ethylene are discussed in Stille, Introduction to Polymer Chemistry, Wiley and Sons, New York, 1962, pages 149 to 154. A continuous, fluidized bed process is preferred. Using this fluidized bed process, the supported vanadium complex together with the alkylhalosilane and, optionally, the promoter and/or modifier, the cocatalyst, the ethylene monomer, and any comonomers are continuously fed into the reactor and polyethylene product is continuously removed. The density of the ethylene copolymer produced may be varied over a wide range depending upon the amount of alpha-olefin comonomer added and upon the particular comonomer employed. The greater the mole percent of alpha-olefin, the lower the density. The alpha-olefin comonomers can have 3 to 12 carbon atoms, and preferably have 3 to 8 carbon atoms. Examples of these comonomers are propylene, 1-butene, 1-hexene, 4-methyl-1-pentene, and 1-octene.

The fluidized bed polymerization is conducted at a temperature below the sintering temperature of the product. The operating temperature is generally in the range of 10°C to 115°C. Preferred operating temperatures will vary depending upon the density desired. High density polyethylenes of greater than 0.94 gram per cubic centimeter ($g/cm^3$) are produced at operating temperatures of 85°C to 115°C, and preferably 90°C to about 100°C. Low density polyethylenes ranging in density from about 0.91 to 0.94 $g/cm^3$ are preferably produced at an operating temperature of 75°C to 90°C. Very low density polyethylenes of less than 0.91 $g/cm^3$ are preferably produced at an operating temperature of 10°C to 80°C. In the case of very low density polyethylenes, it is necessary to dilute the reaction mixture with a large quantity of diluent gas in order to prevent the formation of polymer agglomerates and sustain polymerization on a continuous basis.

The fluidized bed reactor is typically operated at pressures of up to 1,000, and preferably 50 to 350, psig (1 psig = 0.981 bar gauge)

A chain transfer agent, such as hydrogen, can be used to terminate the polymer chain. Usually the ratio of hydrogen to ethylene will vary between 0.001 to 2.0 moles of hydrogen per mole of ethylene.

Some advantages of the catalyst of this invention are that:

(i) it is three times as active as a similar catalyst, which does not have the alkylhalosilane or a promoter;

(ii) it is similar in activity to a like catalyst, which does not have the alkylhalosilane, but includes a promoter;

(iii) with a promoter added to the alkylhalosilane containing catalyst, it is at least 50 percent more active than the corresponding promoted vanadium based catalyst;

(iv) the alkylhalosilane containing catalyst produces a broad molecular weight distribution polyethylene in high yield while subject catalyst with added promoter provides a very high yield;

(v) the alkylhalosilane containing catalyst is easy to prepare using standard methods of preparation, and exhibits excellent hydrogen and comonomer response;

(vi) based on analytical evidence, it is believed that the critical alkylhalosilane treatment step modifies the vanadium in the catalyst and creates a new vanadium species. This species has a unique ESCA (electron spectroscopy for chemical analysis) pattern, an oxidation state of 2.5, and a slightly higher halide level; and

(vii) in halocarbon promoted systems, high residual inorganic halides are found in the resin product. These halides have been shown to have adverse effects on both processing equipment and product quality. In the resin produced with promoter-free catalyst, residual inorganic halides are negligible.

The invention is illustrated by the following examples (where 1 psi = 0.981 bar and 1 psig = 0.981 bar gauge)

## Examples 1 to 13

A. Vanadium trichloride is dissolved in excess tetrahydrofuran (THF) and the resulting solution is impregnated into the pores of silica (prepared as described above). After the residual solvent is removed, the free flowing precursor powder is treated with methyltrichlorosilane at reflux temperature to provide a molar ratio of methyltrichlorosilane to vanadium of 225:1 in the catalyst. The excess silane is decanted and the solid catalyst is washed copiously with hydrocarbon solvent. After drying, the catalyst is used, as is, without further modification. The procedure is carried out under nitrogen.

B. Procedure A is repeated except that the silica and a promoter are first slurried in THF and then the vanadium trichloride is added.

C. Procedure A is repeated except that the methyltrichlorosilane step is omitted.

D. Procedure B is repeated except that the methyltrichlorosilane step is omitted.

Polymerization is effected in a reactor under standard slurry polymerization conditions, i.e., the catalyst is introduced into the reactor in 600 milliliters of hexane; the monomer is ethylene introduced at a partial pressure of 100 psi; there is no comonomer; the total pressure is 160 psig; hydrogen is introduced; the balance of the pressure is provided by nitrogen; the temperature is 85 °C; and residence time is 30 minutes.

The variables and results are set forth in the Table.

Notes with respect to the Table are as follows:

1. The catalyst used in each example is identified by the above procedures for making it, i.e., A, B, C, or D.

2. TIBA = triisobutylaluminum

TEAL = triethylaluminum

3. Activity = grams of polyethylene per millimole of vanadium per hour per 100 psi of ethylene.

4. MI = melt index: ASTM D-1238, Condition E. Measured at 190 °C and reported as decigrams per minute.

5. MFR = melt flow ratio: ratio of flow index to melt index. Flow index: ASTM D-1238, Condition F. Measured at 10 times the weight used in the melt index test above.

**Table**

| Example | Catalyst | Millimole of Catalyst | Hydrogen Partial Pressure (psi) | Cocatalyst | Cocatalyst/V (mole ratio) | Promoter | Promoter/V (mole ratio) | Activity | MI (dg/min) | MFR |
|---|---|---|---|---|---|---|---|---|---|---|
| 1 | A | 0.03 | 5 | TIBA | 25 | - | - | 2495 | 0.2 | 110 |
| 2 | A | 0.03 | 5 | TIBA | 25 | - | - | 2300 | 0.3 | 109 |
| 3 | A | 0.05 | 5 | TIBA | 25 | - | - | 1653 | 0.2 | 93 |
| 4 | A | 0.03 | 20 | TIBA | 25 | - | - | 1550 | 1.9 | 120 |
| 5 | A | 0.05 | 20 | TIBA | 25 | - | - | 1200 | 2.9 | 102 |
| 6 | B | 0.03 | 5 | TIBA | 25 | $CFCl_3$ | 25 | 3490 | 0.1 | 130 |
| 7 | B | 0.03 | 5 | TIBA | 25 | $CFCl_3$ | 25 | 3220 | 0.2 | 118 |
| 8 | D | 0.05 | 5 | TEAL | 25 | $CFCl_3$ | 25 | 2015 | 0.5 | 95 |
| 9 | D | 0.03 | 5 | TEAL | 40 | $CFCl_3$ | 40 | 1500 | 0.3 | 80 |
| 10 | D | 0.03 | 20 | TEAL | 40 | $CFCl_3$ | 40 | 1040 | 4.2 | 88 |
| 11 | D | 0.03 | 20 | TEAL | 25 | $CFCl_3$ | 25 | 1612 | 2.5 | 111 |
| 12 | D | 0.03 | 5 | TIBA | 25 | $CFCl_3$ | 25 | 2500 | 0.1 | 102 |
| 13 | C | 0.03 | 5 | TIBA | 25 | - | - | 575 | - | - |

## Claims

**1.** A catalyst system comprising:

(i) the reaction product of a vanadium compound and an electron donor, which is a liquid, organic Lewis base in which the vanadium compound is soluble;
(ii) an alkylhalosilane having the following formula:

$$R_a\text{—}Si\text{—}X_b$$

wherein
R is an alkyl having 1 to 10 carbon atoms;
X is independently chlorine, bromine, or iodine;
a is 1 or 2;
b is 2 or 3; and
a + b = 4.
(iii) a silica support into which components (i) and (ii) are impregnated; and
(iv) a hydrocarbyl aluminum cocatalyst.

**2.** The catalyst system of claim 1 wherein the electron donor is an alkyl ester of an aliphatic or aromatic carboxylic acid; an aliphatic ketone; an aliphatic amine; an aliphatic alcohol; an alkyl or cycloalkyl ether; or mixtures thereof.

**3.** The catalyst system of claim 1 wherein the vanadium compound is a vanadium trihalide.

**4.** The catalyst system of at least one of the claims 1-3 wherein in the formula of the alkylhalosilane
R is an alkyl having 1 to 5 carbon atoms; and
X is chlorine,
the alkylhalosilane being e.g. methyltrichlorosilane.

**5.** The catalyst system of at least one of the claims 1-4 wherein the mole ratio of alkylhalosilane to vanadium is in the range of 150:1 to 500:1.

**6.** The catalyst system of at least one of the claims 1-5 additionally comprising a halocarbon promoter having e.g. the following formula:

$R_cCX_{(4-c)}$

wherein
R is hydrogen or an unsubstituted or halogen substituted alkyl radical having 1 to 6 carbon atoms;
X is a halogen, and each X is alike or different; and
c is 0, 1, or 2.

**7.** The catalyst system of claim 6 wherein the promoter is $CFCl_3$, $CHCl_3$, $CH_2Cl_2$, or $CH_3CCl_3$.

**8.** A process for polymerization comprising contacting ethylene and, optionally, one or more alpha olefins having 3 to 12 carbon atoms, under polymerization conditions, with the catalyst system of at least one of the claims 1-7.

**9.** The process of claim 8 wherein hydrogen is introduced into the process.

**10.** The process of at least one of the claims 8-9 wherein the electron donor is an alkyl ester of an aliphatic or aromatic carboxylic acid; an aliphatic ketone; an aliphatic amine; an aliphatic alcohol; an alkyl or cycloalkyl ether; or mixtures thereof.

**11.** The process of at least one of the claims 8-10 wherein the vanadium compound is a vanadium trihalide.

**12.** The process of at least one of the claims 8-11 wherein, in the alkylhalosilane,
R is an alkyl having 1 to 5 carbon atoms; and
X is chlorine,

the alkylhalosilane being e.g. methyltrichlorosilane.

**13.** The process of at least one of the claims 8-12 wherein the mole ratio of alkylhalosilane to vanadium is in the range of 150:1 to 500:1.

**14.** The process of at least one of the claims 8-13 additionally comprising a halocarbon promoter having e.g. the following formula:

$R_cCX_{(4-c)}$

wherein
R is hydrogen or an unsubstituted or halogen substituted alkyl radical having 1 to 6 carbon atoms;
X is a halogen, and each X is alike or different; and
c is 0, 1, or 2.

**15.** The process of claim 14 wherein the promoter is $CFCl_3$, $CHCl_3$, $CH_2Cl_2$, or $CH_3CCl_3$.

**Patentansprüche**

**1.** Katalysatorsystem, welches umfaßt:
(i) das Reaktionsprodukt einer Vanadiumverbindung und eines Elektronendonors, der eine flüssige, organische Lewis-Base ist, in der die Vanadiumverbindung löslich ist,
(ii) ein Alkylhalosilan mit der folgenden Formel:

$R_a\text{-Si-}X_b$

in der
R ein Alkyl mit 1 bis 10 Kohlenstoffatomen ist,
X unabhängig Chlor, Brom oder Iod ist,
a 1 oder 2 ist,
b 2 oder 3 ist und
$a + b = 4$,
(iii) ein Siliciumdioxidträger, in den die Komponenten (i) und (ii) imprägniert sind, und
(iv) ein Hydrocarbylaluminium-Cokatalysator.

**2.** Katalysatorsystem nach Anspruch 1, worin der Elektronendonor ein Alkylester einer aliphatischen oder aromatischen Carbonsäure, ein aliphatisches Keton, ein aliphatisches Amin, ein aliphatischer Alkohol, ein Alkyl- oder Cycloalkylether oder eine Mischung derselben ist.

**3.** Katalysatorsystem nach Anspruch 1, worin die Vanadiumverbindung ein Vanadiumtrihalogenid ist.

**4.** Katalysatorsystem nach mindestens einem der Ansprüche 1 bis 3, worin in der Formel des Alkylhalosilans
R ein Alkyl mit 1 bis 5 Kohlenstoffatomen und
X Chlor ist,
das Alkylhalosilan also z.B. Methyltrichlorsilan ist.

**5.** Katalysatorsystem nach mindestens einem der Ansprüche 1 bis 4, worin das Molverhältnis von Alkylhalosilan zu Vanadium im Bereich von 150 : 1 bis 500 : 1 liegt.

**6.** Katalysatorsystem nach mindestens einem der Ansprüche 1 bis 5, welches zusätzlich einen Halogen-Kohlenwasserstoff-Promotor mit beispielsweise folgender Formel umfaßt:

$R_cCX_{(4-c)}$

worin
R Wasserstoff oder einen unsubstituierten oder mit Halogen substituierten Alkylrest mit 1 bis 6 Kohlenstoffatomen bedeutet,

X Halogen ist und jedes X gleich oder verschieden ist und
c 0, 1 oder 2 ist.

**7.** Katalysatorsystem nach Anspruch 6, worin der Promotor $CFCl_3$, $CHCl_3$, $CH_2Cl_2$ oder $CH_3CCl_3$ ist.

**8.** Verfahren zur Polymerisation, welches umfaßt: Inkontaktbringen unter Polymerisationsbedingungen von Ethylen und gegebenenfalls einem oder mehreren alpha-Olefinen mit 3 bis 12 Kohlenstoffatomen mit dem Katalysatorsystem nach mindestens einem der Ansprüche 1 bis 7.

**9.** Verfahren nach Anspruch 8, worin Wasserstoff in den Prozeß eingeführt wird.

**10.** Verfahren nach mindestens einem der Ansprüche 8 bis 9, worin der Elektronendonor ein Alkylester einer aliphatischen oder aromatischen Carbonsäure, ein aliphatisches Keton, ein aliphatisches Amin, ein aliphatischer Alkohol, ein Alkyl- oder Cycloalkylether oder eine Mischung derselben ist.

**11.** Verfahren nach mindestens einem der Ansprüche 8 bis 10, worin die Vanadiumverbindung ein Vanadiumtrihalogenid ist.

**12.** Verfahren nach mindestens einem der Ansprüche 8 bis 11, worin im Alkylhalosilan
R ein Alkyl mit 1 bis 5 Kohlenstoffatomen und
X Chlor ist,
das Alkylhalosilan also z.B. Methyltrichlorsilan ist.

**13.** Verfahren nach mindestens einem der Ansprüche 8 bis 12, worin das Molverhältnis von Alkylhalosilan zu Vanadium im Bereich von 150 : 1 bis 500 : 1 liegt.

**14.** Verfahren nach mindestens einem der Ansprüche 8 bis 13, welches zusätzlich einen Halogen-Kohlenwasserstoff-Promotor mit beispielsweise folgender Formel umfaßt:

$R_cCX_{(4-c)}$

worin
R Wasserstoff oder einen unsubstituierten oder mit Halogen substituierten Alkylrest mit 1 bis 6 Kohlenstoffatomen bedeutet,
X Halogen ist und jedes X gleich oder verschieden ist und
c 0, 1 oder 2 ist.

**15.** Verfahren nach Anspruch 14, worin der Promotor $CFCl_3$, $CHCl_3$, $CH_2Cl_2$ oder $CH_3CCl_3$ ist.

## Revendications

**1.** Composition de catalyseur comprenant :
(i) le procédé de réaction d'un composé de vanadium et d'un donneur d'électrons, qui est une base de Lewis organique liquide dans laquelle le composé de vanadium est soluble ;
(ii) un alkylhalogénosilane répondant à la formule suivante :

$$R_a — Si — X_b$$

dans laquelle
R représente un groupe alkyle ayant 1 à 10 atomes de carbone ;
X représente indépendamment le chlore, le brome ou l'iode ;
a est égal à 1 ou 2 ;
b est égal à 2 ou 3 ; et
a + b = 4 ;
(iii) un support consistant en silice, qu'imprègnent les constituants (i) et (ii) ; et

(iv) un cocatalyseur du type hydrocarbylaluminium.

**2.** Composition de catalyseur suivant la revendication 1, dans laquelle le donneur d'électrons est un ester alkylique d'un acide carboxylique aliphatique ou aromatique ; une cétone aliphatique ; une amine aliphatique ; un alcool aliphatique ; un éther alkylique ou cycloalkylique ; ou un de leurs mélanges.

**3.** Composition de catalyseur suivant la revendication 1, dans laquelle le composé de vanadium est un trihalogénure de vanadium.

**4.** Composition de catalyseur suivant au moins l'une des revendications 1 à 3, dans laquelle, dans la formule de l'alkylhalogénosilane,
R représente un groupe alkyle ayant 1 à 5 atomes de carbone ; et
X représente le chlore,
l'alkylhalogénosilane étant, par exemple, le méthyltrichlorosilane.

**5.** Composition de catalyseur suivant au moins l'une des revendications 1 à 4, dans laquelle le rapport molaire de l'alkylhalogénosilane au vanadium est compris dans l'intervalle de 150:1 à 500:1.

**6.** Composition de catalyseur suivant au moins l'une des revendications 1 à 5, comprenant en outre un promoteur halogénocarboné répondant, par exemple, à la formule suivante :

$R_cCX_{(4-c)}$

dans laquelle
R représente l'hydrogène ou un radical alkyle non substitué ou substitué avec un halogène et ayant 1 à 6 atomes de carbone ;
X représente un halogène, les groupes X étant identiques ou différents ; et
c est égal à 0, 1 ou 2.

**7.** Composition de catalyseur suivant la revendication 6, dans laquelle le promoteur est $CFCl_3$, $CHCl_3$, $CH_2Cl_2$ ou $CH_3CCl_3$.

**8.** Procédé de polymérisation, comprenant la mise en contact d'éthylène et, facultativement, d'une ou plusieurs alpha-oléfines ayant 3 à 12 atomes de carbone, dans des conditions de polymérisation, avec la composition de catalyseur suivant au moins l'une des revendications 1 à 7.

**9.** Procédé suivant la revendication 8, dans lequel de l'hydrogène est introduit lors de la mise en oeuvre du procédé.

**10.** Procédé suivant au moins l'une des revendications 8 et 9, dans lequel le donneur d'électrons est un ester alkylique d'un acide carboxylique aliphatique ou aromatique ; une cétone aliphatique ; une amine aliphatique ; un alcool aliphatique ; un éther alkylique ou cycloalkylique ; ou un de leurs mélanges.

**11.** Procédé suivant au moins l'une des revendications 8 à 10, dans lequel le composé de vanadium est un trihalogénure de vanadium.

**12.** Procédé suivant au moins l'une des revendications 8 à 11, dans lequel, dans l'alkylhalogénosilane,
R représente un groupe alkyle ayant 1 à 5 atomes de carbone ; et
X représente le chlore,
l'alkylhalogénosilane étant, par exemple, le méthyltrichlorosilane.

**13.** Procédé suivant au moins l'une des revendications 8 à 12, dans lequel le rapport molaire de l'alkylhalogénosilane au vanadium est compris dans l'intervalle de 150:1 à 500:1.

**14.** Procédé suivant au moins l'une des revendications 8 à 13, comprenant en outre un promoteur halogénocarboné répondant, par exemple, à la formule suivante :

$R_cCX_{(4-c)}$

dans laquelle
R représente l'hydrogène ou un radical alkyle non substitué ou substitué avec un halogène et ayant 1 à 6 atomes de carbone ;
X représente un halogène, les groupes X étant identiques ou différents ; et
c est égal à 0, 1 ou 2.

**15.** Procédé suivant la revendication 14, dans lequel le promoteur est $CFCl_3$, $CHCl_3$, $CH_2Cl_2$ ou $CH_3CCl_3$.